# EUROPEAN PATENT APPLICATION

(11) **EP 0 954 192 A1**
(43) Date of publication of application: **03.11.1999**
(21) Application number: 99107999.7
(22) Date of filing: 22.04.1999
(51) Int. Cl.: H04Q 7/38

(54) **Base station apparatus and handover method**

(30) Priority: 28.04.1998 JP 11956098
(71) Applicant: Matsushita Electric Industrial Co., Ltd., Kadoma-shi, Osaka 571-8501 (JP)
(72) Inventor: Kitade, Takashi, Kanagawa 239-0847 (JP); Miya, Kazuyuki, Kawasaki-shi, Kanagawa 215-0021 (JP); Hayashi, Masaki, Yokosuka-shi, Kanagawa 239-0847 (JP)
(74) Representative: Grünecker, Kinkeldey, Stockmair & Schwanhäusser Anwaltssozietät

(57) **Abstract**

Where a soft handover is carried out among a plurality of base stations, the target base station stores slot assigning data informed by the source base station in a user slot assigning memory 101, wherein on the basis of the information, the slot selector device 102 selects a slot having little traffic among those other than the slot assigned by the source base station, and a suitable slot is assigned by the slot assigning device 103. Therefore, signals transmitted from a plurality of base stations are assigned to different slots, and demodulating fingers are uniformly assigned with respect to signals coming from the respective base stations without providing a number of demodulating fingers at a mobile station.

## Description

### BACKGROUND OF THE INVENTION

### Field of the invention

The present invention relates to a base station apparatus and a handover method which are used for a radio communication system.

### Description of the related art

TDMA (Time division multiple access) and CDMA (code division multiple access), etc., are available as a multiple access system which is used for mutual radio communication among users.

The TDMA system is a system which allocates different slot timings to the respective users.

The CDMA system is a system in which a transmission side transmits signals spread over a wide band by multiplying modulated information data by a spreading code of which rate is higher than that of the information data, and a receiving side demodulate the information data by multiplying the received signal by the same spreading code as the transmission side at the same timing as the transmission side to process despreading. Since, in the CDMA system, the respective users are able to utilize the same frequency band between a plurality of cells by assigning different spreading codes to the respective users.

Furthermore, the CDMA system is able to separate a direct wave arriving directly from an indirect wave that is a delayed version arriving after being reflected by buildings, etc., to combine by RAKE combining, whereby receiving quality can be improved by positively utilizing multi-path.

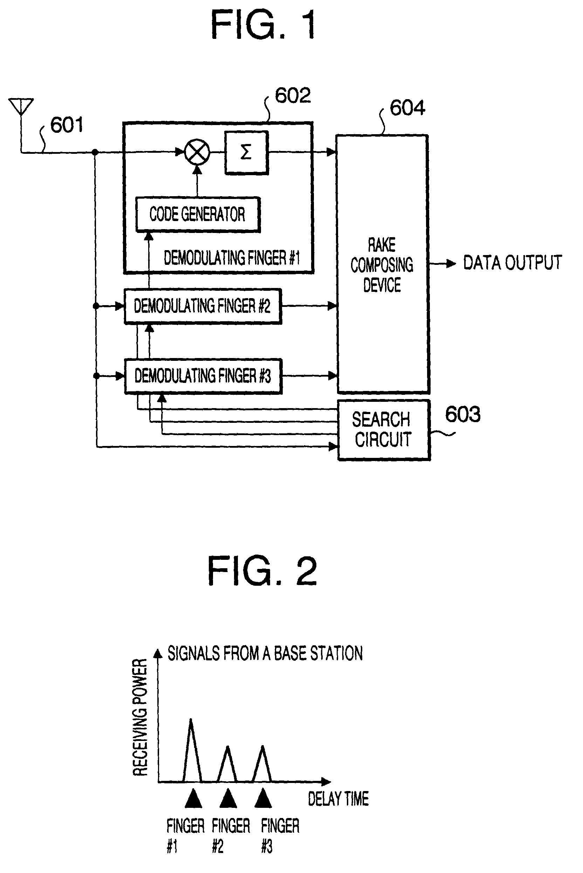

FIG. 1 shows a configuration of a demodulator for CDMA which is incorporated in a mobile station used for a CDMA radio communication system (hereinafter, referred to as "CDMA system"), wherein received signals outputted from an antenna 1 which receives radio waves are provided to a plurality of demodulating fingers 2 (#1 through #3) in parallel, while provided to a search circuit 3. The search circuit 3 generates a delay profile showing a relationship between the arrival time of path and received power, and determines a timing assigned to the respective demodulating fingers corresponding to the power level of the path. The determined timings are, respectively, inputted into the demodulating fingers 2 (#1 through #3). In the demodulating fingers 2 (#1 through #3), despreading processing is carried out at the respective timings (separation of paths), and the result thereof is inputted into a RAKE combining device 4. In the RAKE composition device 4, despread data are combined and detected.

In the case of a mobile station in which three fingers are incorporated at maximum, three fingers may be assigned to demodulating fingers at maximum with respect to signals arriving from a base station A before performing a soft handover. FIG.2 shows a delay profile of signals arriving from one base station, which shows a state where the three demodulating fingers #1 through #3 are assigned to three paths.

Herein, in a cellular system in a multiple access system, handover is carried out when a mobile station moves between cells. The handover means that a communication line is changed from a base station with which communication is currently performed, to another base station of a destination zone when a mobile station moves from a zone of the base station with which the communication is currently communicated to another zone of another base station.

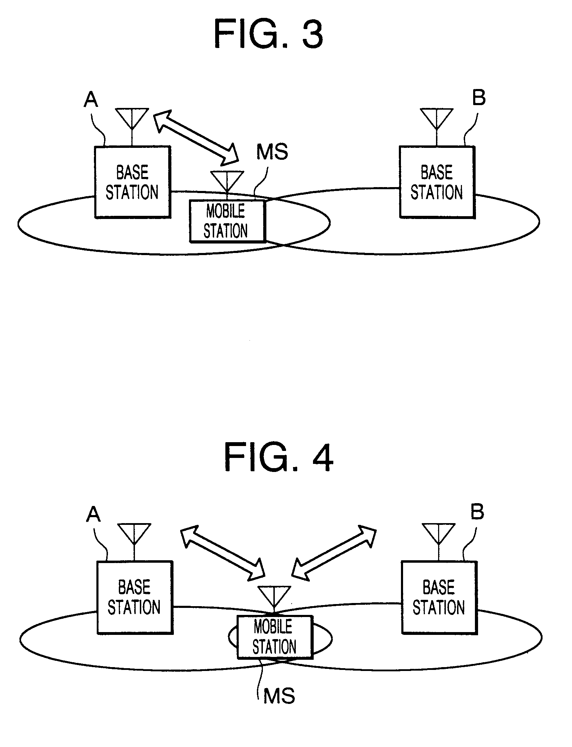

FIG.3 is an exemplary view of a cellular system before starting a handover, and FIG.4 is an exemplary view of a cellular system when carrying out a handover. Hereinafter, the base station with which communication is being carried out when carrying out a handover is called a "source base station", and a base station located in a zone for which a mobile station is intended to move is called a "target base station".

In the CDMA system, as shown in FIG.3, where a mobile station MS which communicates with a base station A moves to an adjacent cell, moving in a cell controlled by the base station A, the mobile station MS starts transmitting data to and receiving them from a base station B which controls the adjacent cell while maintaining communication of the same data with the base station A as shown in FIG.4. And, if the quality of communication with the target base station B is made better than the quality of communication with the source base station A, the mobile station MS ends the communication with the source base station A.

Thus, in the CDMA system, since the frequency of every base station is the same, a soft handover can be carried out, in which each finger is assigned to each of a plurality of base stations, the communication line is changed from a base station to another base station while maintaining the communication line with a plurality of base stations.

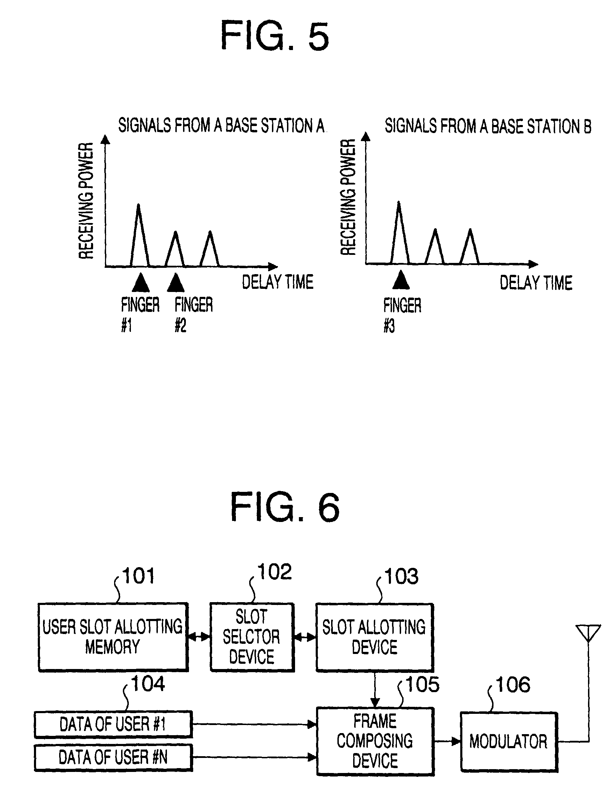

However, in a conventional CDMA system, where a soft handover is started between the base stations A and B, three fingers must be, respectively, assigned to the base station A and base station B unless an assignment of signals transmitted from the base station is controlled by a mobile station. For example, as shown in FIG.5, where two fingers are assigned to the base station A, only one finger is able to be assigned to the base station B.

That is, there remains such a problem by which, in the conventional CDMA system, the number of demodulating fingers assigned to one base station is reduced when carrying out a handover, whereby receiving quality may be degraded.

Furthermore, in order to effectively perform RAKE combining, if demodulating fingers are assigned in the order of paths whose received power is greater, the demodulating fingers are not uniformly assigned to signals transmitted from each of base stations which are performing a handover. Therefore, certain restrictive conditions are required when carrying out measurement of received signal power of each of the base stations.

Furthermore, if it is attempted that a necessary number of demodulating fingers are secured, it is necessary to incorporate demodulating fingers corresponding to the number to match the number of base stations with which communication is made when performing a handover. Therefore, the circuit configuration will be large-sized and complicated.

### SUMMARY OF THE INVENTION

It is therefore an object of the present invention to provide a base station apparatus and a handover method for enabling a mobile station apparatus even having a small circuit size to maintain high receiving quality when carrying out a soft handover.

The present invention is configured so that transmission signals of a base station apparatus with which communication is carried out and transmission signals of another base station apparatus to which a handover will be performed from that point are inserted into different slots and a mobile station apparatus side changes demodulating fingers in time division to execute despreading sequentially, thereby achieving the above object.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG. 1 is a configuration view of a demodulator for CDMA;
FIG. 2 is a view showing an example of assigning demodulating fingers before a handover;
FIG. 3 is an exemplary view of a cellular system before a handover is performed;
FIG. 4 is an exemplary view of a cellular system during a handover;
FIG. 5 is a view showing an example of assigning demodulating fingers during a conventional handover;
FIG. 6 is a block diagram showing a configuration of a base station according to a first embodiment of the present invention;
FIG. 7 is an exemplary view of a cellular system including a base station according to the first embodiment;
FIG. 8 is a view showing an example of assigning slots according to the first preferred embodiment;
FIG. 9 is a view showing an example of assigning slots before initiation of a handover according to a second preferred embodiment; and
FIG. 10 is a view showing an example of assigning slots during a handover according to the second embodiment.

### DETAILED DESCRIPTION OF THE PREFERRED EMBODIMENTS

Hereinafter, a description is given of preferred embodiments of the present invention with reference to the accompanying drawings.

In the preferred embodiments of the invention, a description is given of the case where radio communication is performed by the CDMA/TDMA system between a base station and a mobile station in a cellular system. The CDMA/TDMA system is a system in which the CDMA system and TDMA system co-exist, wherein a plurality of time slots are divided and assigned to each user to communicate using the CDMA system as its base.

### (First embodiment)

FIG. 6 is a block diagram showing a configuration of a base station according to a first embodiment of the present invention.

The base station is, as shown in FIG. 6, mainly composed of a slot assigning memory 101 which stores slot assigning data per user, a slot selector device 102 for selecting a slot based on the information, a slot assigning device 103 for assigning slots, a frame composing device 105 for composing data 104 per user as a frame, and a modulator 106 for modulating the data.

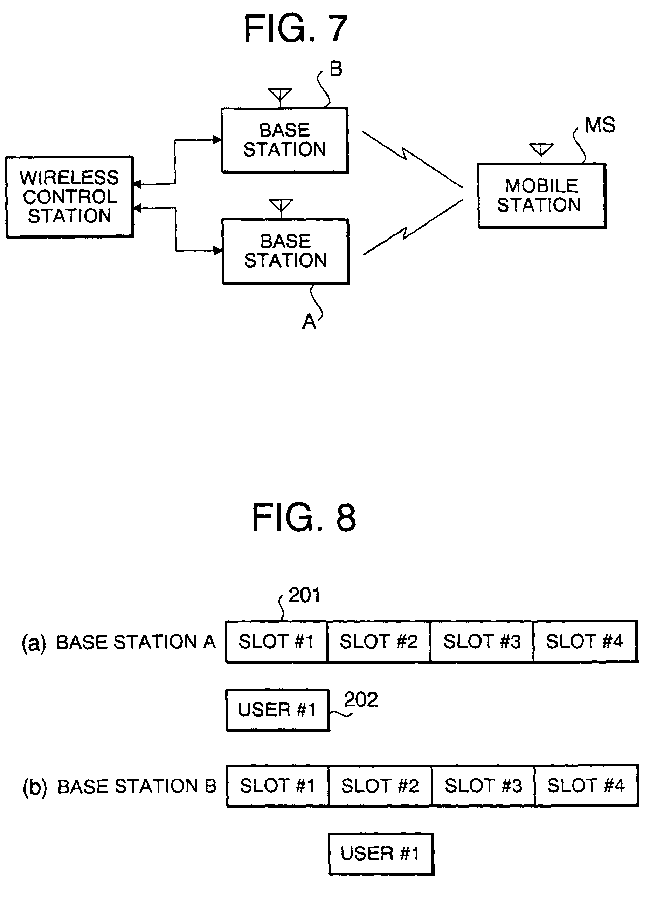

FIG.7 is an exemplary view showing a configuration of a cellular system including base stations according to the embodiment.

In FIG. 7, the base station A and base station B, respectively, have a configuration as shown in FIG.6, wherein radio communication with a mobile station MS is carried out, and cable communication with radio control stations is carried out.

FIG. 8 is a view showing an example of assigning slots of a base station according to the embodiment.

The respective base stations assign one or a plurality of users (mobile stations), which is or are in communication, to the respective slots #1 through #4 which divide one frame into a plurality, wherein transmitting and receiving with a user allocated to the slot at the respective slot timings are carried out. And, the respective base stations store information, which shows which slot is allotted to which user (hereinafter called "slot assigning data"), in the user slot assigning memory 101.

Next, a detailed description is given of a slot allotment when performing a handover in a cellular system provided with the base station apparatus constructed as above.

At present, as shown in FIG.8(a), it is assumed that the base station A is communicating with a mobile station MS, using the slot #1. And, a slot assigning data is given from the base station A to a radio control station in advance.

The mobile station MS acquires code information to search for a signal coming from a base station (including the base station B) in the peripheral cells, through communication with the base station A. Using the abovementioned code information, the receiving power from a base station in the peripheral cells is measured by a search circuit. Accordingly, the mobile station MS transmits the received power value from the measure peripheral cells and base station A, to the radio control station via the base station A.

The radio control station judges, on the basis of the received power information coming from the peripheral base station indicated from the mobile station MS and the base station A, whether or not a handover is required. And, in a case where a handover is judged to be necessary, the radio control station requests a base station B which will be the target of the handover, to start communication with the mobile station MS, and gives the slot assigning data stored in the base station A to the base station B.

The base station B stores the received slot assigning data of the base station A in the user slot assigning memory 101. Thereby, the base station B recognizes, as shown in FIG. 8, that the base station A is starting communication with the mobile station MS, using the slot #1. The base station B searches for and selects a slot having the least traffic, other than the slot (#1) used by the base station A in the slot selector device 102. FIG. 8 shows a case where the base station B selects the slot #2 other than the slot #1.

The base station B informs the mobile station MS via the radio control station and base station A that the slot #2 is assigned to the mobile station MS. Thereafter, the base station B assigns the user data to the respective slots by a slot assigning device 103, on the basis of the selected slot result, composes a frame by a frame composing device 105, modulates the frame data by a modulator 106, and transmits the data through an antenna.

As a result, the slot #1 is assigned to the communication between the mobile station MS and base station A, and slot #2 is assigned to the communication between the mobile station MS and base station B, wherein the same user data are transmitted and received in the respective slots.

In the mobile station MS, since transmission signals of the source base station A and transmission signals of the target base station B are, respectively, inserted into different slots #1 and #2, communication is enabled at the maximum ratio composition of these signals, by sequentially carrying out despreading while changing over base stations to which demodulating fingers are divided time-shared and assigned.

Thus, with the base stations according to the invention, it is possible to assign a slot other than the slot assigned by the base station which is now in communication. Thereby, if the demodulating fingers are divided time-shared and are changed over at a mobile station side and despreading is sequentially carried out, it is possible to uniformly assign demodulating fingers to signals coming from the respective base stations without providing a number of demodulating fingers at the mobile station side, and it is possible to highly maintain the receiving quality at mobile stations whose circuit configuration is small. Furthermore, at the mobile stations, it is possible to measure SIR (or received power) from the respective base stations at a high accuracy.

### (Second preferred embodiment)

The second preferred embodiment is an embodiment in which the slot position is adjusted between the source base station and the target base station and slots are arranged as in the first preferred embodiment.

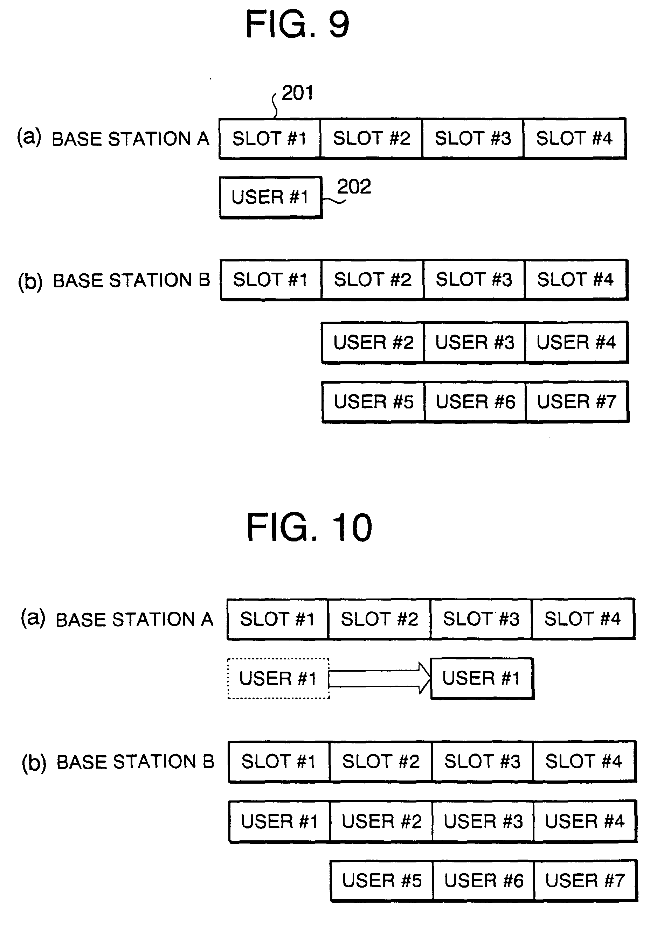

FIG. 9 and FIG. 10 are views, respectively, showing an example of assigning slots in a base station according to the preferred embodiment.

As shown in FIG. 9, it is assumed that communication is carried out between the source base station A and user #1, using the slot #1. Furthermore, it is assumed that traffic of slots other than the slot #1 is maximum at the base station B.

In a case where a handover is performed in this state, first, the radio control station informs the target base station B of the slot assigning data that the source base station A is starting communication with the user #1, using the slot #1.

The base station B stores the informed slot assigning data in the user slot assigning memory 101. First, by the slot selector device 102, the base station B searches for an appropriate slot other than the slot #1 which the base station A uses for communication with the user #1.

However, as shown in FIG. 9, there are cases where the traffic of a slot other than the slot #1 is maximum, and no assignment is made to slots other than the slot #1.

In this case, the base station B requests the base station A to assign the data of the user #1 to another slot.

With respect to this request, the base station A judges, by the slot selector device 102 on the basis of the slot assigning data, whether or not there are any empty slots to be assigned, other than those assigned to the user #1. And, the base station A stores the after-modification slot assigning data in the user slot assigning memory 101.

As shown in FIG. 10, in a case where the traffic of slots other than the slot #1 is little, the data of user #1 are assigned to another slot. Furthermore, in FIG. 10, an example in which the slot #1 is changed to slot #3 is illustrated. However, any slot having little traffic other than the slot #1 may be acceptable.

And, the base station A assigns user data to the respective slots by the slot assigning device 103 on the basis of the result of the selected slot, and a frame is composed by the frame composing device 105, wherein the frame data are modulated by the modulator 106 and are transmitted through an antenna.

As a result, as the slot to which the data of user #1 is assignted, the base station A selects slot #3, and the base station B selects slot #1. The base station A informs the mobile station MS that the base station A selected the slot #3 and the base station B selected the slot #1.

Thus, according to the preferred embodiment, by collaboration between the source base station and the target base station, slots which do not overlap each other may be assigned.

Furthermore, after the base station A changes the slot assigning data, the base station A informs the base station B of this. Furthermore, the base station B requests the base station A to assign another slot, and at the same time, may designate the destination of the slot on the basis of the informed slot assigning data of the base station A.

Furthermore, according to each of the preferred embodiments, a collaborated action with respect to a spreading ratio may be carried out between the source base station and the target base station.

For example, it is assumed that a high rate data transmission is carried out between the source base station and a user, and only the data of a low spreading ratio may be assigned while there are many users who carry out a low rate transmission at a high spreading ratio in cells of the target base station.

In this case, first, the spreading ratio is changed at the source base station, so communication can be carried out at a spreading ratio suitable to the communication environments in the cells of the target base station, wherein a handover is performed.

Furthermore, in each of the abovementioned examples, a description was given of the case in which a cellular system is used as an example. However, the invention may be applicable to a handover of the other radio communication systems.

The present invention is not limited to the above described embodiments, and various variations and modifications may be possible without departing from the scope of the present invention.

This application is based on the Japanese Patent Application No. HEI10-119560 filed on April 28, 1998, entire content of which is expressly incorporated by reference herein.

## Claims

1. A base station apparatus comprising:
an information acquiring means (101) for acquiring information of the first slot assigned by another station which is currently in communication;
a slot selecting means (102) for assigning the second slot other than said first slot on the basis of the acquired information; and
a communication means (103) for performing communication by said assigned second slot.

2. A base station apparatus as set forth in Claim 1, wherein said slot selecting (102) means requests another station, which is currently in communication, to assign slots in a case where the traffic of all slots other than the first slot are the maximum.

3. A base station apparatus as set forth in Claim 1, wherein said slot selecting means (102) changes the present slot assignment when a change request of slots is received from other stations.

4. A mobile station apparatus making radio communication with a base station according to any of Claim 1 to Claim 3, and determining a timing to assign to the respective demodulating fingers in compliance with the scale of power of pathes, comprising: a searching means for changing over base stations, to which said demodulating fingers are assigned slot by slot; and a composing means for composing data despreaded by said respective demodulating fingers.

5. A handover method comprising the steps of:
acquiring information of the first slot assigned by a source base station apparatus;
assigning a second slot other than the first slot;
and making different slots assigned to the respective base stations which are being handed over, in a target base station apparatus.

6. A handover method as set forth in Claim 5, wherein the slots assigned to the source base station are changed so that suitable slots are selected by the target base station apparatus.
